# EUROPÄISCHE PATENTANMELDUNG

(11) **EP 3 770 705 A1**
(43) Veröffentlichungstag der Anmeldung: **27.01.2021**
(21) Anmeldenummer: 19187711.7
(22) Anmeldetag: 23.07.2019
(51) Int. Cl.: G05B 19/409

(54) **VERFAHREN ZUR BEDIENUNG EINER INDUSTRIELLEN MASCHINE**

(71) Anmelder: Siemens Aktiengesellschaft, 80333 München (DE)
(72) Erfinder: Eckl, Roland, 91301 Forchheim (DE); Schlosser, Daniel, 76889 Steinfeld (DE); Weisenberger, Elmar, 91054 Erlangen (DE); Tannert, Markus, 90547 Stein (DE)

(57) **Zusammenfassung**

Verfahren zur Bedienung einer industriellen Maschine (1) oder Anlage (2), wobei über ein berührungsempfindliches Eingabegerät (10) mit einem Bedienbereich (11) zum einen eine Geste (G1,...,G6) eines Bedieners (B) erkannt wird und aus der erkannten Geste (G1,...,G6) eine der Geste (G1,...,G6) zuvor zugeordnete Gesten-Aktion (A1,...,A6) ausgeführt wird, und/oder zum anderen eine Direkteingabe eines Bedieners (B) auf ein zuvor innerhalb des Bedienbereiches (11) projektiertes Direkt-Bedienelement (21,...,26) erkannt wird, bei welchem eine zuvor zugeordnete Aktion (A21,...,A26) an die Steuereinheit (SPS) zur Steuerung der industriellen Maschine (1) oder Anlage (2) weitergeleitet wird, wobei ein erster Eingabemodus (E1), in welchem eine Bedienung auf das Direkt-Bedienelement (21,...,26) erkannt wird, und ein zweiter Eingabemodus (E2), in welchem eine Bedienung mittels der Geste (G1,...,G6) erkannt wird, benutzt wird, wobei ein innerhalb des Bedienbereiches (11) angeordnetes Gestenstart-Bedienelement (12) dazu benutzt wird, das bei einer Berührung des Gestenstart-Bedienelementes (12) in den zweiten Eingabemodus (E2) gewechselt wird, da durch das erstmalige Berühren des Gestenstart-Bedienelementes (12) im Folgenden explizit eine Geste (G1,...,G6) erkannt werden soll, und nach Erkennen der Geste (G1,...,G6) oder nach Ablauf einer Erkennungszeit (tₑ) wird wieder in den ersten Eingabemodus (E1) gewechselt, in welchem Direkteingaben eines Bedieners (B) auf Direkt-Bedienelemente (21,...,26) ohne Verzögerung verarbeitet werden.

## Beschreibung

Die Erfindung betrifft ein Verfahren zur Bedienung einer industriellen Maschine oder Anlage, wobei über ein berührungsempfindliches Eingabegerät mit einem Bedienbereich zum einen eine Geste eines Bedieners erkannt wird und aus der erkannten Geste eine der Geste zuvor zugeordnete Gesten-Aktion ausgeführt wird, und/oder zum anderen eine Direkteingabe eines Bedieners auf ein zuvor innerhalb des Bedienbereiches projektiertes Direkt-Bedienelement erkannt wird, bei welchem eine zuvor zugeordnete Aktion an die Steuereinheit zur Steuerung der industriellen Maschine oder Anlage weitergeleitet wird.

Ein Eingabegerät stellt eine Benutzerschnittstelle (HMI, Human-Machine-Interface) dar und erlaubt es einem Bediener ein Bedienen und Beobachten einer Maschine und ein Eingreifen in einen, vorzugsweise industriellen, Prozess. Die Bereitstellung der Informationen erfolgt vorzugsweise über Displays und/oder Monitore und eine Eingabe von Bedienhandlungen erfolgt vorzugsweise über eine berührungsempfindliche Fläche. Beides zusammen wird heutzutage als ein Touchscreen eingesetzt.

Heutzutage sind zur Eingabe von Informationen auf Smartphones oder Tablet-PCs Gesten bereits bekannt. Auch in einem HMI-Umfeld zur Bedienung von industriellen Prozessen über Touch-screens werden zunehmend, vorzugsweise Touchgesten, eingesetzt. Bewusste Bewegungen eines Eingabegerätes oder eines Fingers eines Bedieners bei direkter Bedienung können als Gesten aufgefasst werden, welche wiederum zum Auslösen bestimmter Aktionen herangezogen werden können. Eine der bekanntesten Gesten sind typischerweise die Swipe-Geste oder die Wisch-Geste, um einfach von einem Bildschirminhalt zu einem anderen Bildschirminhalt zu gelangen. Oder eine andere sehr bekannte Geste ist die Pinch-Geste, wobei über zwei Finger die gespreizt oder zusammengezogen werden Inhalte vergrößert oder verkleinert werden können. Solche Gesten sind in der Consumer-Welt bei Mobilgeräten sehr verbreitet.

Beim Bedienen von industriellen Prozessen ergibt sich aber folgende Problematik. Das Erkennen einer Geste setzt einige Zeit voraus, bevor diese eindeutig von anderen Gesten oder gar von einfachen Eingabe-Impulsen unterschieden werden kann. Ein typisches Beispiel ist das "Drücken" eines Bedienelementes durch einfache Berührung. Für gewöhnlich soll das Betätigen eines Bedienelementes, beispielsweise eines Schalters, sofort zur Ausführung der dem Bedienelement hinterlegten Aktion führen, um in sicherheitskritischen Anlagenumgebungen sofort auf etwas reagieren zu können. Beispielsweise die Steuerung von einem mechanischen Gerät, wie eine Presse, welche sofort wieder auffahren soll, wenn ein Bedienelement gedrückt wird. Um nun aber zwischen einem einfachen Berühren und etwa einer Wisch-Geste unterscheiden zu können, muss das System eine gewisse Latenz berücksichtigen, innerhalb derer es sicher ist, dass keine Geste begonnen wurde. Somit würde selbst ein einfaches Berühren eines Bedienelementes mehrerer 100 ms verzögert werden - oder aber die Verzögerung ist zu kurz und an Stelle einer Geste wird fälschlicherweise doch eine Berührung ausgelöst.

Gesten werden in der Regel über den gesamten Bildschirm ausgeführt. Wenn bei einer auszuführenden Geste versehentlich ein anderes Direkt-Bedienelement berührt wird, kann dies zu gefährlichen Fehlinterpretationen oder zu gefährlichen Absetzen von Aktionen, welche gar nicht gewollt sind, führen.

Während all diese Probleme bei normalen Consumer-Geräten und Heimanwendungen meist nicht kritisch sind, kann bei einer industriellen HMI-Anwendung Gefahr für Leib und Leben bestehen oder aber ein folgenschwerer Eingriff in eine Produktion erfolgen.

Der Einsatz von Gesten in industriellen Produkten ist daher meist nur eingeschränkt oder gar nicht möglich. Die zuvor genannten Latenzen müssen insbesondere bei sehr kostengünstiger Hardware noch größer gewählt werden, da bereits die Eingabeverarbeitung selbst mit gewissen Laufzeiten behaftet sein kann.

Es ist daher eine Aufgabe der vorliegenden Erfindung ein Verfahren zur Bedienung einer industriellen Maschine oder Anlage bereitzustellen, bei welchem auch Gesten genutzt werden können, ohne sicherheitsrelevante Eingabe-Verzögerungen bei Direkteingaben von Direkt-Bedienelementen zu riskieren.

Die Aufgabe wird für das eingangs genannte Verfahren dadurch gelöst, dass ein erster Eingabemodus, in welchem eine Bedienung auf das Direkt-Bedienelement erkannt wird, und ein zweiter Eingabemodus, in welchem eine Bedienung mittels der Geste erkannt wird, benutzt wird, wobei ein innerhalb des Bedienbereiches angeordnetes Gestenstart-Bedienelement dazu benutzt wird, dass bei einer Berührung des Gestenstart-Bedienelementes in den zweiten Eingabemodus gewechselt wird, da durch das erstmalige Berühren des Gestenstart-Bedienelementes im Folgenden explizit eine Geste erkannt werden soll, und nach Erkennen der Geste oder nach Ablauf einer Erkennungszeit wird wieder in den ersten Eingabemodus gewechselt, in welchem Direkteingaben eines Bedieners auf Direkt-Bedienelemente ohne Verzögerung verarbeitet werden.

Die eingangs genannte Aufgabe wird durch ein speziell geschaffenes Gestenstart-Bedienelement gelöst, welches Bestandteil einer HMI-Bedienoberflächen-Projektierung ist. Da eine Eingabe in Form von einer Geste nicht sofort als eine zugeordnete Aktion verarbeitet werden soll, sondern es soll erst die Geste vollständig erkannt werden, ist eine Erkennungszeit notwendig. In dieser Erkennungszeit kann aber nicht sofort im industriellen Prozess eine Aktion ausgeführt werden.

Nach dem Stand der Technik waren zuvor das gesamte Eingabegerät derart ausgestaltet, dass diese Erkennungszeit auch bei Direkteingaben auf Direkt-Bedienelemente ablief und dies unnötige sicherheitsrelevante Verzögerungen im Steuern einer Anlage oder Maschine bedeutete.

Erfindungsgemäß ist nun ein besonderer Bereich durch das Gestenstart-Bedienelement geschaffen worden. Ausgehend von diesem Bereich wird die Geste gestartet und in dem Moment, in welchem ein erstmaliger Kontakt zu dem Gestenstart-Bedienelement hergestellt ist, wird die Eingabevorrichtung von dem ersten Eingabemodus in einen zweiten Eingabemodus versetzt. Der erste Eingabemodus ist ein Default-Eingabemodus und garantiert bei Bedienung eines Direkt-Bedienelementes eine nahezu verzögerungsfreie Ausführung der folgenden Aktion. Beim zweiten Eingabemodus wird zunächst die Geste erkannt und bei vollständiger Erkennung der Geste kann eine Gesten-Aktion ausgeführt werden.

In einem vorteilhaften Verfahrensschritt wird im zweiten Eingabemodus eine Bewegung der Geste auch außerhalb des Gestenstart-Bedienelementes erkannt. Wird eine Geste im Gestenstart-Bedienelement begonnen, werden Gesten auch wenn sich das Eingabegerät, beispielsweise ein Mauszeiger oder sein Finger, sich zwischenzeitlich nicht mehr innerhalb des vorgegebenen Bereiches des ursprünglichen Gestenstart-Bedienelementes befinden, wird zu Ende erkannt und sonstige zufällige angefahrenen Direkteingabe-Elemente werden ignoriert. Wird eine Geste erkannt oder liegt keine Berührung mehr vor, wird automatisch zurück in den ersten Eingabemodus gewechselt.

Weiterhin ist es vorteilhaft, wenn nach dem Erkennen der Geste eine Übergangszeit gestartet wird und nach Ablauf der Übergangszeit in den ersten Eingabemodus gewechselt wird.

Auch ist es vorteilhaft, wenn die Direkt-Bedienelemente die Sicherheit der Maschine oder Anlage betreffende Aktionen auslösen. Denn Gesten sind bevorzugt in den meisten Fällen nur Komfort-Funktionen, wie beispielsweise ein Seitenwechsel innerhalb einer Bedienoberfläche oder ein Zoomen in ein Detail rein und somit nicht sicherheitsrelevant.

Weiterhin ist es für einen Inbetriebsetzer komfortabel die Gesten in einem Engineering-System zu definieren, wobei das Direkt-Bedienelement oder die Direkt-Bedienelemente und das Gestenstart-Bedienelement in einen Grafikeditor des Engineering-Systems entsprechend einem zukünftigen Anlagenbedienbild platziert werden.

Durch das dedizierte Platzieren des Gestenstart-Bedienelementes im Grafikeditor für Anlagenbedienbilder des Engineering-Systems wird auch sichergestellt, dass der für die Gesten vorgesehene Platz nicht anderweitig verwendet wird. Durch das Platzieren im Editor wird die Fläche semantisch als Zone für Gesten markiert. Ein anderer Benutzer wird die Fläche später also nicht versehentlich mit weiteren Elementen belegen und die Gestenbedienung dadurch erschweren oder verhindern. Außerhalb der von einem Benutzer festgelegten Fläche für das Gestenstart-Bedienelement, beispielsweise repräsentiert durch die Direkt-Bedienelemente, bleiben die vorteilhaften Eigenschaften eines HMI-Touchscreen Gerätes unverändert erhalten. Eine Berührung kann sofort zur Auslösung einer Aktion führen, ohne dass irgendwelche künstlichen Erkennungszeiten oder Latenzen für Gesten berücksichtigt werden müssen. Andersherum hat jegliche Geste, die innerhalb des Gestenstart-Bedienelementes gestartet wurde, keinerlei direkte Auswirkungen auf andere Elemente des HMI-Bediengerätes, wie etwa die Direkt-Bedienelemente.

Auch wird die eingangs genannte Aufgabe durch ein Eingabegerät mit einem Bedienbereich zur Bedienung einer industriellen Maschine oder Anlage gelöst. Dabei umfasst das Eingabegerät einen Touchscreen, einen Touch-Controller, und ist ausgestaltet eine Geste eines Bedieners zu erkennen und aus der erkannten Geste eine der Geste zuvor zugeordnete Gesten-Aktion auszuführen, und weiterhin ausgestaltet über einen Direkt-Bedienelement eine Direkteingabe eines Bedieners innerhalb des Bedienbereiches zu erkennen und eine zuvor zugeordnete Aktion an die Steuereinheit zur Steuerung der industriellen Maschine oder Anlage zu leiten.

Erfindungsgemäß ist nun ein Erkennungsmittel vorhanden, welches ausgestaltet ist von einem ersten Eingabemodus, in welchem eine Bedienung auf das Direkt-Bedienelement erkannt wird, in einen zweiten Eingabemodus zu wechseln, in welchem eine Bedienung mittels der Geste erkannt wird, wobei ein innerhalb des Bedienbereiches angeordnetes Gestenstart-Bedienelement vorhanden ist, und das Erkennungsmittel ausgestaltet ist über den Touch-Controller eine Berührung des Gestenstart-Bedienelementes zu erkennen und dadurch in den zweiten Eingabemodus zu wechseln, dabei ist weiterhin das Erkennungsmittel ausgestaltet, durch das erstmalige Berühren des Gestenstart-Bedienelementes im Folgenden explizit eine Geste zu erkennen, und nach Erkennen der Geste oder nach Ablauf einer Erkennungszeit wieder in den ersten Eingabemodus zu wechseln, in welchem Direkteingaben eines Bedieners auf Direkt-Bedienelemente ohne Verzögerung verarbeitet werden können.

Um bei einer auszuführenden Geste keine Störungen der Direkt-Bedienelemente hervorzurufen, weist das Eingabegerät vorteilhafter Weise ein Deaktivierungsmittel auf, welches ausgestaltet ist, im zweiten Eingabemodus das oder die Direkt-Bedienelemente zu deaktivieren, so dass Bewegungen der Geste auch außerhalb des Gestenstart-Bedienelementes sicher erkannt werden und keine Fehlfunktionen auslösen.

Auch ist es vorteilhaft, wenn das Eingabegerät mit dem Deaktivierungsmittel derart ausgestaltet ist, dass nach dem Erkennen der Geste eine Übergangszeit gestartet wird und nach Ablauf der Übergangszeit erst wieder in den ersten Eingabemodus gewechselt wird.

Auch wird die eingangs genannte Aufgabe durch ein Engineering-System zum Projektieren von Anlagenbedienbildern für Bedienoberflächen für ein Eingabegerät mit einem Bedienbereich zur Bedienung einer industriellen Maschine oder Anlage gelöst. Dabei umfasst das Engineering-System ein Gestendefinitionsmittel zum Definieren von Gesten, einen Grafik-Editor zum Projektieren der Anlagenbedienbilder für Bedienoberflächen, in welchen Direkt-Bedienelemente platziert und konfiguriert werden, wobei erfindungsgemäß der Grafik-Editor zusätzlich dazu ausgestaltet ist, ein Gestenstart-Bedienelement in dem Anlagenbedienbild der Bedienoberfläche zu platzieren und einen reservierten Bereich für den Gestenstart zu markieren, wobei das Gestenstart-Bedienelement dazu ausgestaltet ist, bei erstmaliger Berührung eine Mitteilung abzusetzen, welche es ermöglicht, von einen ersten Eingabemodus in einen zweiten Eingabemodus eines Eingabegerätes zu wechseln.

Die Erfindung wird nachfolgend anhand der Zeichnung näher erläutert. Es zeigt
- FIG 1: ein Eingabegerät mit einem Bediener zur Steuerung einer industriellen Anlage,
- FIG 2: mögliche Gesten,
- FIG 3: ein Eingabegerät mit Erkennungsmittel und
- FIG 4: ein Engineering-System mit einem Grafik-Editor.

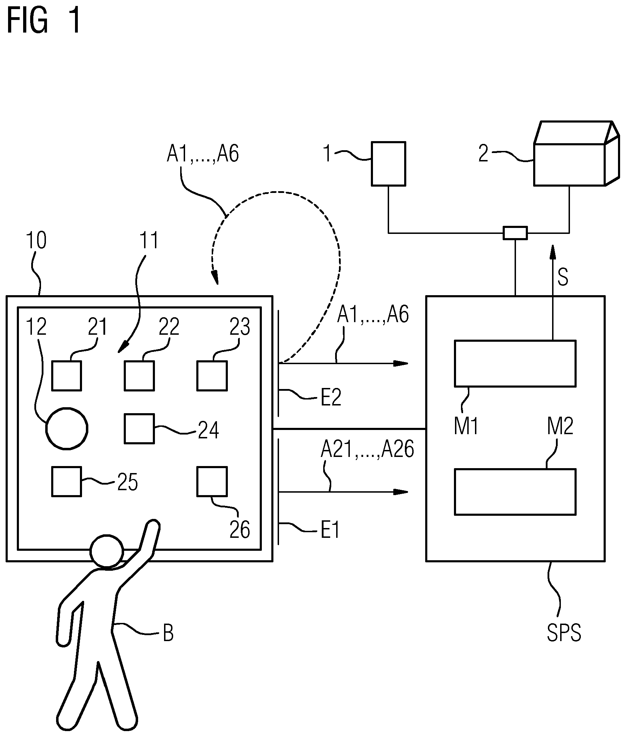

Gemäß FIG 1 ist ein Eingabegerät 10 mit einem Bedienbereich 11 dargestellt. In dem Bedienbereich 11 sind ein erstes Direkt-Bedienelement 21, ein zweites Direkt-Bedienelement 22, ein drittes Direkt-Bedienelement 23, ein viertes Direkt-Bedienelement 24, ein fünftes Direkt-Bedienelement 25 und ein sechstes Direkt-Bedienelement 26 angeordnet. Das erste Direkt-Bedienelement 21 führt die Funktion "Pumpe an" aus, das zweite Direkt-Bedienelement 22 führt die Funktion "Pumpe aus" aus, das dritte Direkt-Bedienelement 23 führt beispielsweise die Funktion "Kran Motor Stopp" aus. All die ausgeführten Funktionen durch die Direkt-Bedienelemente 21,...,26 sind entsprechend zugeordnete Aktionen A21,...,A26 zugewiesen. Beim Anstoßen einer ersten Aktion A21 soll beispielsweise unverzüglich die entsprechende Pumpe eingeschalten werden und zwar verzögerungsfrei. Die Betätigungen der Direkt-Bedienelemente 21,...,26 werden in einem ersten Eingabemodus E1 ausgeführt. Der erste Eingabemodus E1 arbeitet verzögerungsfrei. Will man nun aber an dem Eingabegerät 10 eine Geste G1,...,G6 ausführen, so steht erfindungsgemäß ein Gestenstart-Bedienelement 12 zur Verfügung. Der Bediener B muss nun seine Geste G1,...,G6 in den Bereich des Gestenstart-Bedienelementes 12 starten und von da aus zu Ende ausführen. Denn mit Hilfe des Gestenstart-Bedienelementes 12 wird bei einer ersten Berührung des Gestenstart-Bedienelementes 12 in einen zweiten Eingabemodus E2 gewechselt. In dem zweiten Eingabemodus E2 steht nun für das Erkennen der Geste G1,...,G6 eine gewisse Verzögerungszeit zur Verfügung. Nach Erkennen der Geste G1,...,G6 wird wieder in dem ersten Eingabemodus E1 gewechselt und die Direkt-Bedienelemente 21,...,26 können nun wieder ohne Verzögerung bedient und verarbeitet werden.

Die Aktionen A21,...,A26 der Direkt-Bedienelemente 21,...,26 werden demnach als verzögerungsfreie Aktionen im ersten Eingabemodus E1 an eine SPS weitergeleitet und die SPS kann mit einem sicherheitsrelevanten Auswertemittel M1 darauf reagieren und die Anlage 2 oder die industrielle Maschine 1 dementsprechend steuern.

Für gewöhnlich werden die Gesten G1,...,G6 als Komfortfunktionen eingesetzt und können Zurückwirken auf das Eingabegerät 10, z.B. eine Funktion wie Wischen zum Seitenwechsel oder Zoom zum Vergrößern ausführen.

Für Komfortfunktionen könnte zusätzlich in der SPS ein nicht sicherheitsrelevantes Auswertemittel M2 zur Verfügung gestellt werden.

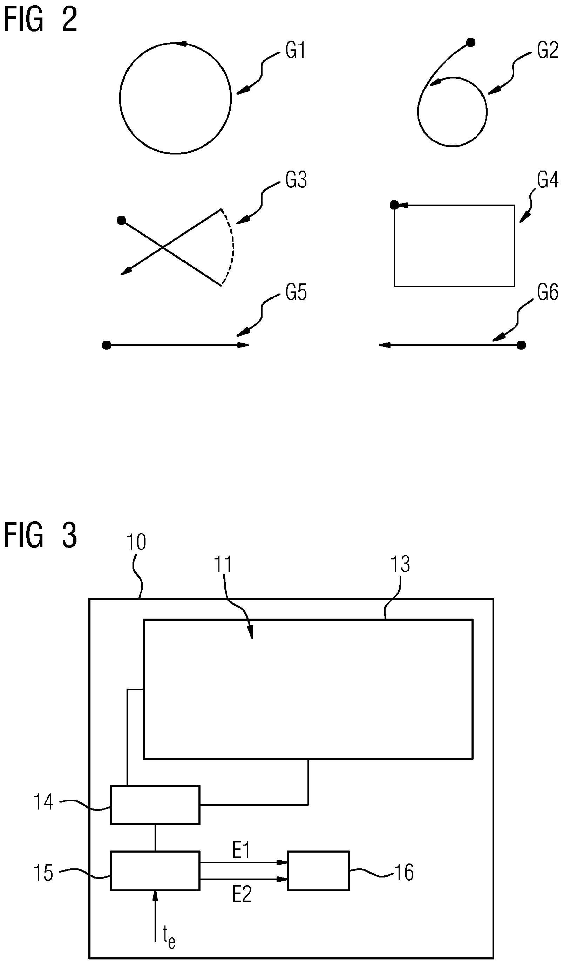

Die FIG 2 zeigt mögliche Gesten G1,...,G6. Die erste Geste G1 stellt eine Kreisgeste dar, die zweite Geste G2 stellt eine Zeichnung einer "6" dar. Die dritte Geste G3 stellt das Zeichnen eines Kreuzes dar, die vierte Geste G4 stellt das Aufzeigen eines Rechteckes dar, die fünfte Geste G5 entspricht einem Swipe oder Wischen nach rechts und die sechste Geste G6 entspricht einem Swipe oder Wischen nach links.

Die FIG 3 zeigt ein Eingabegerät 10 mit einem Bedienbereich 11, welches innerhalb eines Touch-Screens 13 angeordnet ist.

Der Touch-Screen 13 steht mit einem Touch-Controller 14 in Verbindung, welcher die Bedienung/Bewegungen auf dem Bedienbereich registriert.

Wird ein Gestenstart-Bedienelement 12 berührt so wird die über ein Erkennungsmittel 15 mit Hilfe des Touch-Controllers 14 erkannt. Das Erkennungsmittel 15 wiederum steht mit einem Deaktivierungsmittel 17 in Verbindung und anhand des durch das Deaktivierungsmittel 17 erkannten Eingabemodus E1/E2 können bedarfsweise die Direkt-Bedienelemente 21,...,26 während einer Gestenerkennung deaktiviert werden.

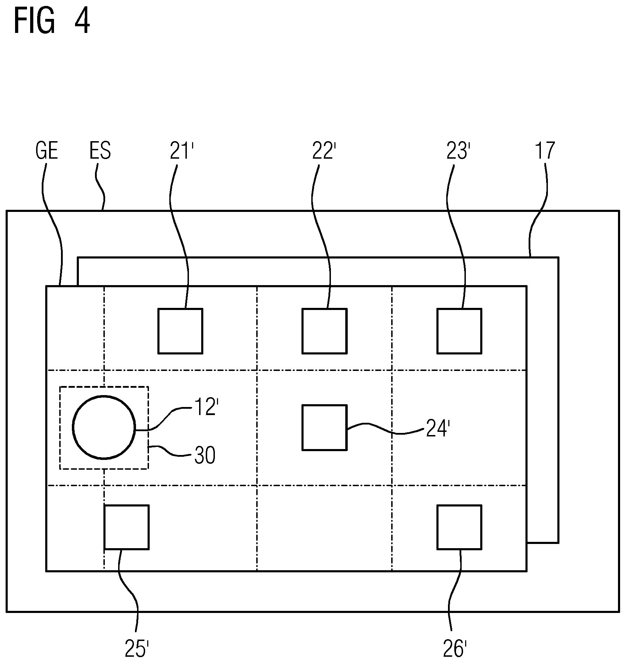

Die FIG 4 zeigt ein Engineering-System ES mit einem Grafik-Editor GE. Der Grafik-Editor GE wird zum Projektieren der Bedienoberflächen eines HMI-Gerätes benutzt. Und in einem Rasterfeld können die Direkt-Bedienelement 21,...,26 als Grafik-Objekte 21',...,26' dementsprechend der gewollten Ergonomie eines Bedieners B angelegt werden. Die Grafik-Objekte 21',...,26' in dem Grafik-Editor GE werden zur Laufzeit (Runtime) die entsprechenden Direkt-Bedienelemente 21,...,26 in einem Anlagenbedienbild. Zusätzlich nun ist der Grafik-Editor GE dazu ausgestaltet, ein Gestenstart-Bedienelement 12 in der Bedienoberfläche zu platzieren, welches hier ebenfalls als ein Gestenstart-Objekt 12' dargestellt ist und damit einen reservierten Bereich 30 für das Gestenstart-Bedienelement 12 zu markieren, das Gestenstart-Bedienelement 12 ist dazu ausgestaltet, bei erstmaliger Berührung eine Mitteilung abzusetzen, welche es ermöglicht, von einem ersten Eingabemodus E1 in den zweiten Eingabemodus E2 eines Eingabegerätes 10 zu wechseln.

Weiterhin weist das Engineering-System ES ein Gestendefinitionsmittel 17 auf, in welchen man beispielsweise mit einer Mausbewegung die mit FIG 2 beschriebenen Gesten G1,...,G6 einzeichnen und definieren kann.

## Patentansprüche

1. Verfahren zur Bedienung einer industriellen Maschine (1) oder Anlage (2), wobei über ein berührungsempfindliches Eingabegerät (10) mit einem Bedienbereich (11) zum einen
- eine Geste (G1,...,G6) eines Bedieners (B) erkannt wird und aus der erkannten Geste (G1,...,G6) eine der Geste (G1,...,G6) zuvor zugeordnete Gesten-Aktion (A1,...,A6) ausgeführt wird, und/oder zum anderen
- eine Direkteingabe eines Bedieners (B) auf ein zuvor innerhalb des Bedienbereiches (11) projektiertes Direkt-Bedienelement (21,...,26) erkannt wird, bei welchem eine zuvor zugeordnete Aktion (A21,...,A26) an die Steuereinheit (SPS) zur Steuerung der industriellen Maschine (1) oder Anlage (2) weitergeleitet wird,
**dadurch gekennzeichnet, dass**
- ein erster Eingabemodus (E1), in welchem eine Bedienung auf das Direkt-Bedienelement (21,...,26) erkannt wird, und
- ein zweiter Eingabemodus (E2), in welchem eine Bedienung mittels der Geste (G1,...,G6) erkannt wird, benutzt wird, wobei ein innerhalb des Bedienbereiches (11) angeordnetes Gestenstart-Bedienelement (12) dazu benutzt wird, das bei einer Berührung des Gestenstart-Bedienelementes (12) in den zweiten Eingabemodus (E2) gewechselt wird, da durch das erstmalige Berühren des Gestenstart-Bedienelementes (12) im Folgenden explizit eine Geste (G1,...,G6) erkannt werden soll, und nach Erkennen der Geste (G1,...,G6) oder nach Ablauf einer Erkennungszeit (tₑ) wird wieder in den ersten Eingabemodus (E1) gewechselt, in welchem Direkteingaben eines Bedieners (B) auf Direkt-Bedienelemente (21,...,26) ohne Verzögerung verarbeitet werden.

2. Verfahren nach Anspruch 1, wobei im zweiten Eingabemodus (E2) eine Bewegung der Geste (G1,...,G6) auch außerhalb des Gestenstart-Bedienelements (12) erkannt werden.

3. Verfahren nach Anspruch 1 oder 2, wobei nach dem Erkennen der Geste (G1,...,G6) eine Überganszeit (t_{ü}) gestartet wird und nach Ablauf der Übergangszeit (t_{ü}) in den ersten Eingabemodus (E1) gewechselt wird.

4. Verfahren nach einem der Ansprüche 1 bis 3, wobei die Direkt-Bedienelemente (21,...,26) die Sicherheit der Maschine (1) oder Anlage (2) betreffende Aktionen (A21,...,A26) auslösen.

5. Verfahren nach einem der Ansprüche 1 bis 4, wobei die Gesten (G1,...,G6) in einem Engineering-System (ES) definiert werden, wobei das Direkt-Bedienelement (21,...,26) und das Gestenstart-Bedienelement (12) in einem Grafikeditor (GE) für Anlagenbedienbilder des Engineering-Systems (ES) platziert werden.

6. Eingabegerät (10) mit einem Bedienbereich (11) zur Bedienung einer industriellen Maschine (1) oder Anlage (2) umfassend,
einen Touchscreen (13),
einem Touch-Controller (14),
ausgestaltet eine Geste (G1,..,G6) eines Bedieners (B) zu erkennen und aus der erkannten Geste (G1,..,G6) eine der Gesten (G1,..,G6) zuvor zugeordnete Gesten-Aktion (A1,..,A6) auszuführen, und weiterhin ausgestaltet über ein Direkt-Bedienelement (21,...,26)
eine Direkteingabe eines Bedieners (B) innerhalb des Bedienbereiches (11) zu erkennen und eine zuvor zugeordnete Aktion (A21,...,A26) an die Steuereinheit (SPS) zur Steuerung der industriellen Maschine (1) oder Anlage (2) zu leiten,
**dadurch gekennzeichnet, dass**
ein Erkennungsmittel (15) vorhanden ist, welches ausgestaltet ist von einem ersten Eingabemodus (E1), in welchem eine Bedienung auf das Direkt-Bedienelement (21,...,26) erkannt wird, in einem zweiten Eingabemodus (E2) zu wechseln, in welchem eine Bedienung mittels der Geste (G1,...,G6) erkannt wird, wobei ein innerhalb des Bedienbereiches (11) angeordnetes Gestenstart-Bedienelement (12) vorhanden ist, und das Erkennungsmittel (15) ausgestaltet ist über den Touch-Controller (14) eine Berührung des Gestenstart-Bedienelementes (12) zu erkennen und in den zweiten Eingabemodus (E2) zu wechseln, weiterhin ist das Erkennungsmittel (15) ausgestaltet durch das erstmalige Berühren des Gestenstart-Bedienelementes (12) im Folgenden explizit eine Geste (G1,...,G6) zu erkennen, und nach Erkennen der Geste (G1,...,G6) oder nach Ablauf einer Erkennungszeit (tₑ) wieder in den ersten Eingabemodus (E1) zu wechseln, in welchem Direkteingaben eines Bedieners (B) auf Direkt-Bedienelemente (21,...,26) ohne Verzögerung verarbeitet werden.

7. Eingabegerät (10) nach Anspruch 6, wobei ein Deaktivierungsmittel (16) vorhanden ist, welches ausgestaltet ist im zweiten Eingabemodus (E2) das oder die Direkt-Bedienelemente (21,...,26) zu deaktivieren, so dass Bewegungen der Geste (G1,...,G6) auch außerhalb des Gestenstart-Bedienelementes (12) erkannt werden.

8. Eingabegerät (10) nach Anspruch 6 oder 7, wobei das Deaktivierungsmittel (16) ausgestaltet ist nach dem Erkennen der Geste (G1,...,G6) eine Übergangszeit (t_{ü}) zu starten und nach Ablauf der Übergangszeit (t_{ü}) in den ersten Eingabemodus (E1) zu wechseln.

9. Engineering-System (ES) zum Projektieren von Anlagenbedienbildern für Bedienoberflächen für ein Eingabegerät (10) mit einem Bedienbereich (11) zur Bedienung einer industriellen Maschine (1) oder Anlage (2) umfassend,
ein Gestendefinitions-Mittel (17) zum Definieren von Gesten (G1,...,G6), einen Grafik-Editor (GE) zum Projektieren der Bedienoberflächen, in welchen Direkt-Bedienelemente (21,...,26) platziert und konfiguriert werden,
**dadurch gekennzeichnet, dass** der Grafik-Editor (GE) ausgestaltet ist ein Gestenstart-Bedienelement (12) in dem Anlagenbedienbild der Bedienoberfläche zu platzieren und einen reservierten Bereich (30) für das Gestenstart-Bedienelement (12) zu markieren, wobei das Gestenstart-Bedienelement (12) dazu ausgestaltet ist, bei erstmaliger Berührung eine Mitteilung abzusetzen, welche es ermöglicht von einem ersten Eingabemodus (E1) in einen zweiten Eingabemodus (E2) eines Eingabegerätes zu wechseln.
